# EUROPÄISCHE PATENTSCHRIFT

(11) **EP 2 734 326 B1**
(45) Veröffentlichungstag und Bekanntmachung des Hinweises auf die Patenterteilung: **15.02.2017**
(21) Anmeldenummer: 12740108.1
(22) Anmeldetag: 17.07.2012
(51) Int. Cl.: B23G 5/04

(54) **NACHSTELLSYSTEM**
ADJUSTMENT SYSTEM
SYSTÈME DE RÉGLAGE

(30) Priorität: 19.07.2011 DE 102011051958
(43) Veröffentlichungstag der Anmeldung: 28.05.2014
(73) Patentinhaber: Mauser-Werke Oberndorf Maschinenbau GmbH, 78727 Oberndorf (DE)
(72) Erfinder: WEIDINGER, Franz, A-1220 Wien (AT)
(74) Vertreter: Winter, Brandl, Fürniss, Hübner, Röss, Kaiser, Polte - Partnerschaft mbB
(86) Internationale Anmeldenummer: PCT/EP2012/064006
(87) Internationale Veröffentlichungsnummer: WO 2013/011027

(56) Entgegenhaltungen:
- DE-A1- 10 345 993
- DE-A1-102010 013 480
- US-A- 3 492 894

## Beschreibung

Die Erfindung betrifft ein Nachstellsystem gemäß dem Oberbegriff des Patentanspruchs 1.

Derartige Nachstellsysteme werden beispielsweise zum Nachstellen bei einem Verschleiß des Werkzeugs oder beim Feinstbearbeiten von Innen- und Außenkonturen von Werkstücken verwendet, wobei diese Konturen beispielsweise zylinderförmig, exzentrisch oder unrund ausgeführt sein können.

Die DE 10 2007 017 800 A1 offenbart ein Nachstellsystem, gemäß dem Oberbegriff des Anspruchs 1, bei dem eine Spindel einen Membrankippkopf trägt, über den eine Werkzeugschneide in Radialrichtung verstellbar ist, um beispielsweise ein kleines Pleuelauge rund, oval und/oder in Kolbenbolzenlängsachse trompetenförmig oder in einer sonstigen geeigneten Form auszubilden. Die Verstellung des Membrankippkopfes erfolgt über ein linear verstellbares Betätigungselement, auch Zugstange genannt, über die ein mit einer Membran in Wirkverbindung stehender, die Werkzeugschneide tragender Werkzeugkopf mit Bezug zur Spindelachse gekippt werden kann, um die Radialverstellung zu bewirken. Die Zugstange ist in der Spindel gelagert und rotiert mit dieser mit. Ein rückwärtiger Endabschnitt der Zugstange ist aus der Spindel herausgeführt und dort über eine Lageranordnung an einem Schlitten abgelagert, der über einen Aktor verstellbar ist. Der Antrieb der Spindel erfolgt bei den bekannten Lösungen über einen Antriebsmotor, der parallel zur Spindelachse angeordnet ist und mit der Spindel über einen Riementrieb oder dergleichen in Wirkverbindung steht. Beim Feinstbearbeiten von Bohrungen muss die Verstelleinrichtung so ausgebildet sein, dass Durchmessertoleranzen ≤ IT6 eingehalten werden kann. Die Rundheit, Zylinderform oder Geradheit der zu bearbeitenden Flächen muss Werte bis zu max. 3µ erreichen. Des Weiteren müssen Profilformen und/oder definierte Ovalität im Bereich von wenigen µ hergestellt werden können.

Nachteilig bei diesen Lösungen ist, dass für den Spindelantrieb und auch die Lagerung der Zugstange ein erheblicher Bauraum und vorrichtungstechnischer Aufwand erforderlich ist. Ein weiterer Nachteil ist die Wärmeübertragung durch die Zugstange.

In der DE 44 01 496 C3 ist eine Verstelleinrichtung zum Bearbeiten von runden, unrunden und/oder nicht zylinderförmigen Konturen beschrieben, bei dem die Verstellung einer Werkzeugschneide über einen Kopf mit Piezotranslatoren erfolgt. Der Kopf ist bei dem bekannten Nachstellsystem in etwa U-förmig ausgebildet, wobei der Piezoaktor in einem feststehenden Schenkel des U-förmigen Kopfes angeordnet ist und auf einen elastisch auslenkbaren Schenkel wirkt, an dem die Werkzeugschneide gehalten ist. Durch Verformung der Piezoaktoren kann der elastisch auslenkbare Schenkel und somit die Werkzeugschneide in Radialrichtung verstellt werden. Nachteilig bei dieser Lösung ist, dass der Werkzeughalter mit einer Elastizität ausgeführt werden muss, sodass insbesondere bei hohen Zerspanungsleistungen die für eine Feinstbearbeitung erforderliche Qualität nicht gewährleistet werden kann. Ein weiterer Nachteil besteht darin, dass der U-förmig ausgebildete Werkzeughalter einen erheblichen Bauraum erfordert. Des Weiteren ist nachteilig, dass aufgrund des U-förmig ausgeführten Werkzeugkopfes insbesondere beim Nachstellen oder Betätigen eine Unwucht erzeugt wird, durch die die Bearbeitungsgenauigkeit weiter verschlechtert werden kann.

Demgegenüber liegt der Erfindung die Aufgabe zugrunde, ein für eine Feinstbearbeitung geeignetes Nachstellsystem zu schaffen, das sich durch eine optimale Steifigkeit und minimale Unwucht auszeichnet.

Diese Aufgabe wird durch ein Nachstellsystem mit den Merkmalen des Patentanspruchs 1 gelöst.

Vorteilhafte Weiterbildungen der Erfindung sind Gegenstand der Unteransprüche.

Das erfindungsgemäße Nachstellsystem hat einen eine Werkzeugschneide tragenden Zustellkopf, der mit einem piezoelektrischen Aktor zur Radialverstellung der Werkzeugschneide ausgeführt ist. Der Zustellkopf hat einen in der Radialrichtung als Zustellrichtung verschiebbaren bzw. verstellbaren Werkzeugschieber, der mit der Werkzeugschneide in Wirkverbindung steht und der über den piezoelektrischen Aktor, im Folgenden Piezoaktor genannt, in Zustellrichtung entlang einer Führung verfahrbar ist.

Durch die Führung des Werkzeugschiebers wird die Stellbewegung des Piezoaktors äußerst exakt in eine Zustellbewegung umgesetzt, wobei Ungenauigkeiten aufgrund einer beim Stand der Technik erforderlichen Auslenkung von Bauelementen des Zustellkopfes vermieden werden können. Die erfindungsgemäße Anordnung mit einem von einem Piezoaktor verstellten Werkzeugschieber zeichnet sich durch eine optimale Steifigkeit aus, wobei aufgrund der präzisen Führung ein sehr exaktes Nachstellen möglich ist. Eine derartige Konstruktion erlaubt es des Weiteren, den Werkzeugschieber weitestgehend symmetrisch mit Bezug zur Rotationsachse der Spindel anzuordnen, sodass die beim eingangs beschriebenen Stand der Technik unvermeidlichen Unwuchten minimiert sind. Die Wirkrichtung der Piezoaktoren verläuft dabei vorzugsweise in Zustellrichtung.

Bei einem Ausführungsbeispiel der Erfindung ist der Werkzeugschieber über ein Gegenkraftelement in Richtung einer Grundstellung vorgespannt. Der Piezoaktor wirkt dann entgegen dieser Vorspannung.

Der Aufbau des Nachstellsystems ist besonders einfach, wenn das Gegenkraftelement durch eine Feder oder eine Federanordnung gebildet ist.

Dieses Gegenkraftelement, etwa eine Federanordnung, kann beispielsweise parallel zum Piezoaktor angeordnet werden, sodass das Nachstellsystem sehr kompaktaufgebaut ist.

Um den Verstellweg und/oder die Verstellkraft zu vergrößern, können mehrere Piezoaktoren parallel und/oder in Reihe zueinander angeordnet werden, sodass sich die Stellwege der einzelnen Piezoaktoren oder die von den einzelnen Piezoaktoren aufgebrachten Stellkräfte summieren.

Bei einem bevorzugten Ausführungsbeispiel der Erfindung sind zwei Einheiten mit zumindest zwei mechanisch in Reihe angeordneten Piezoaktoren parallel zueinander angeordnet.

Bei dieser Variante wird es bevorzugt, wenn das Gegenkraftelement in einer Symmetrieebene zwischen den beiden Piezoaktoreinheiten angeordnet ist.

Das Nachstellsystem ist besonders einfach und kompakt ausgeführt, wenn die Führung für den Werkzeugschieber einerseits von einer Abstützung des Gegenkraftelementes und andererseits von einer Abstützung für den oder die Piezoaktoren begrenzt ist, sodass diese Abstützungen auch den Stellweg des Werkzeugschiebers begrenzen.

Um eine Verschmutzung durch Späne, Kühl-/Schmiermittel oder dergleichen zu minimieren, wird die Führung mit einer Abdeckung zum Arbeitsraum hin abgetrennt.

Bei einem Ausführungsbeispiel der Erfindung ist der Zustellkopf des Nachstellsystems mit einem Hohlschaftkegel-(HSK-)Spannsystem zum Spannen eines mit der Werkzeugschneide ausgeführten Werkzeugs ausgeführt.

Bevorzugte Ausführungsbeispiele der Erfindung werden im Folgenden anhand schematischer Zeichnungen näher erläutert. Es zeigen:
Figur 1 einen stark schematisierten Diagonalschnitt eines ersten Ausführungsbeispiels eines Nachstellsystems;
Figur 2 einen Längsschnitt durch das Nachstellsystem gemäß Figur 1;
Figur 3 einen Diagonalschnitt durch ein weiteres Ausführungsbeispiel eines Nachstellsystems;
Figur 4 einen Längsschnitt durch das Nachstellsystem gemäß Figur 3 und
Figur 5 eine geschnittene Draufsicht auf das Nachstellsystem gemäß Figur 3.

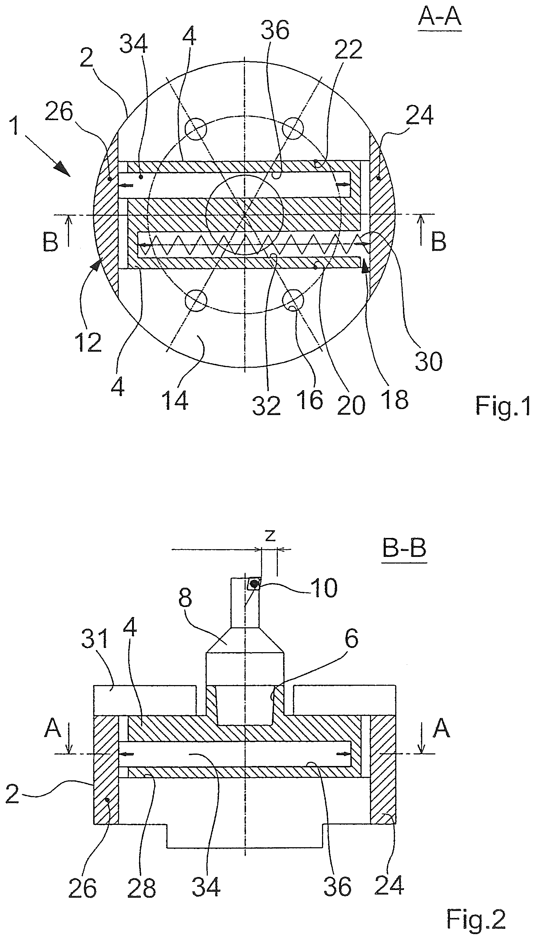

In den Figuren 1 und 2 sind Schnitte A - A und B - B eines erfindungsgemäßen Nachstellsystems 1 dargestellt. Dieses wird an einer Motorspindel einer Werkzeugmaschine oder Bearbeitungseinheit befestigt. Das Nachstellsystem 1 hat einen Zustellkopf 2, in dem ein Werkzeugschieber 4 in Verstellrichtung verschiebbar geführt ist. Dieser hat eine Werkzeugaufnahme 6, in die ein Werkzeug 8 beispielsweise mittels eines HSK-Spannsystems (Hohlschaftkegel) eingesetzt werden kann.

Beim dargestellten Ausführungsbeispiel trägt das Werkzeug 8 eine in Radialrichtung vorstehende Werkzeugschneide 10, die durch entsprechende Verschiebung des Werkzeugschiebers 4 in Radialrichtung (Ansicht nach Figur 2) um das dargestellte Maß Z verstellbar ist. Der Aufbau des Spannsystems, der Werkzeugaufnahme 6 und des Werkzeugs 8 ist aus dem Stand der Technik bekannt, sodass nähere Erläuterungen entbehrlich sind.

Der Zustellkopf 2 hat einen Grundkörper 12, in dem der Werkzeugschieber 4 in Radialrichtung verstellbar (vertikal in den Figuren 1 und 2) ist. Zur Befestigung an der in den Figuren 1 und 2 nicht dargestellten Werkzeugspindel ist der Grundkörper 12 mit einem Befestigungsflansch 14 ausgeführt, in dem Befestigungsbohrungen 16 ausgebildet sind, deren Bohrbild und Rundzentrierung demjenigen einer nicht dargestellten Aufnahme der Werkzeugspindel entspricht, sodass der Grundkörper 12 an der Werkzeugspindel angebracht werden kann. In dem Grundkörper 12 ist eine Parallelführung 18 für den Werkzeugschieber 4 ausgebildet, durch die dieser in Verstellrichtung Z geführt ist. Die Führung 18 besteht im Wesentlichen aus zwei Seitenführungen 20, 22, die sich parallel zur Verstellrichtung Z erstrecken. Der Verfahrweg wird durch zwei Abstützstücke 24, 26 begrenzt, auf die der Werkzeugschieber 4 in seiner jeweiligen Endlage aufläuft. Parallel zur Zeichenebene in Figur 1 ist der Werkzeugschieber 4 auf einer Auflage 28 des Grundkörpers 12 geführt und in Richtung zum Arbeitsraum, d.h. hin zur Werkzeugschneide 10 mittels einer Abdeckung 31 überdeckt, die vorwiegend als Führung dient und darüber hinaus verhindert, dass Späne und/oder Kühl-/ Schmiermittel oder sonstige Verunreinigungen in den Führungsbereich gelangen. Die Abdeckung 31 ist vorzugsweise mit dem Werkzeugschieber 4 verbunden.

Gemäß der einen Schnitt entlang der Linie A - A in Figur 2 zeigenden Figur 1 ist der Werkzeugschieber 4 über ein Gegenkraftelement in Form einer Feder 30 oder einer Federanordnung in Richtung des (in den Figuren 1 und 2) linken Abstützstücks 26 vorgespannt. Diese Feder 30 stützt sich an dem (in den Figuren 1 und 2) rechten Abstützstück 24 ab und taucht mit ihrem freien Endabschnitt in einen Aufnahmeraum 32 des Werkzeugschiebers 4 ein und liegt an einer Stirnfläche dieses Aufnahmeraums 32 an, um den Werkzeugschieber 4 in die genannte Richtung zum Abstützstück 26 hin vorzuspannen. An diesem ist ein Piezoaktor 34 abgestützt, der seinerseits in eine Piezoaufnahme 36 des Werkzeugschiebers 4 eintaucht. Derartige piezoelektrisch angetriebene Aktoren haben einen bestimmten Ausdehnungs- bzw. Zurückziehweg und sind mit der entsprechenden Steuerung der Werkzeugmaschine bzw. der Bearbeitungseinheit verbunden, wobei eine Synchronisation mit der zugeordneten Achse, beispielsweise der Z-Achse und der Drehzahl der Werkzeugspindel erfolgen kann. Die Piezoaktoren 34 werden vorwiegend während der Rotation der Werkzeugspindel über die Maschinensteuerung angesteuert, um den Nachstell-/Betätigungsbereich auszunutzen. Die Funktion derartiger Piezoaktoren ist aus dem eingangs beschriebenen Stand der Technik bekannt, sodass auch diesbezüglich weitere Erläuterungen entbehrlich sind. Wichtig ist, dass derartige Piezoelemente bei Anlegen einer elektrischen Spannung verformbar sind, sodass eine Verstellung über diese Formänderung erfolgt. Dabei können systembedingt durch Piezoelemente höhere Druckkräfte im Sinne einer Verlängerung des Piezoaktors 34 in der Darstellung gemäß Figur 1 als Zugkräfte (im Sinne einer Verkürzung des Piezoaktors 34 in Figur 1) aufgebracht werden. Um dieses zu kompensieren, ist die Feder 30 bzw. die Federanordnung vorgesehen, die den Werkzeugschieber 4 und damit auch den Piezoaktor 34 in Richtung einer Verkürzung des Piezoaktors 34 beaufschlagt. Dabei ist dieser an dem in Figur 1 oben liegenden Abstützstück 26 abgestützt und greift an der innen liegenden Stirnfläche der Piezoaufnahme 36 an. Bei einer Verlängerung des Piezoaktors 34 durch geeignete Ansteuerung wird dann entsprechend der Werkzeugschieber 4 in der Darstellung gemäß den Figuren 1 und 2 gegen die Kraft der Feder 30 nach (in den Figuren 1 und 2) rechts verstellt. Bei entgegengesetzt gerichteter Ansteuerung wird der Piezoaktor 34 verkürzt und die entsprechende Stellbewegung des Werkzeugschiebers 4 durch die Feder 30 getätigt.

Wie im Folgenden erläutert wird, können zur Vergrößerung des Hubs oder der Stellkraft mehrere Piezoaktoren 34 in Reihe und/oder parallel angeordnet werden, sodass sich die Stellkräfte und/oder die Stellwege summieren. Entsprechendes gilt auch für die Feder 30. Durch die erfindungsgemäße Führung des Werkzeugschiebers 4 in Verstellrichtung ist eine äußerst präzise Zustellbewegung ermöglicht, die aufgrund des sehr guten Ansprechverhaltens der piezoelektrischen Steuerung auch bei hohen Spindeldrehzahlen eine hinreichende Stellgeschwindigkeit ermöglichen, um auch komplexe Geometrien mit hoher Zerspanungsleistung zu bearbeiten.

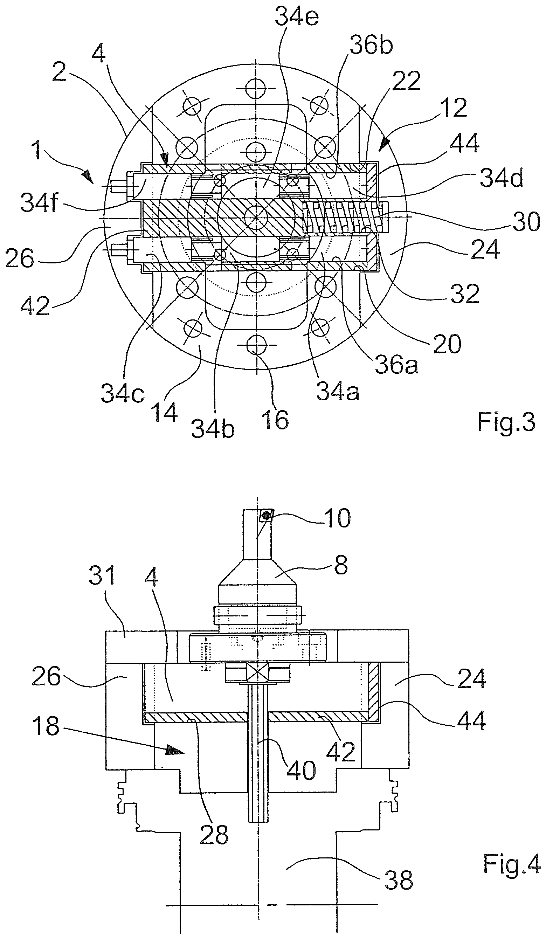

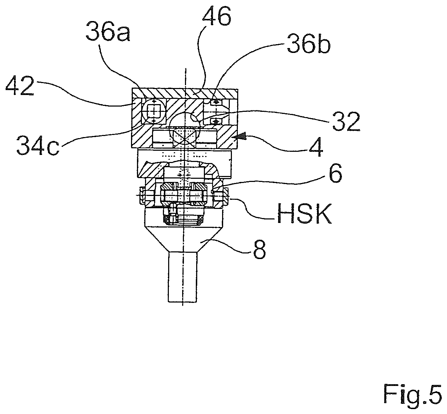

Anhand der Figuren 3 bis 5 wird ein weiteres Ausführungsbeispiel eines erfindungsgemäßen Nachstellsystems erläutert. Der Grundaufbau des Nachstellsystems 1 gemäß den Figuren 3 bis 5 entspricht weitestgehend demjenigen des vorbeschriebenen Ausführungsbeispiels. Demgemäß wird ein Zustellkopf 2 des Nachstellsystems 1 über den Befestigungsflansch 14 mit der in Figur 4 angedeuteten Werkzeugspindel 38 drehfest verbunden, wobei durch die Werkzeugspindel 38 hindurch eine Innenkühlung oder ein Mindermengenschmiersystem 40 geführt sind, über die das System gekühlt und geschmiert werden kann. Das Werkzeug 8 ist wie beim zuvor beschriebenen Ausführungsbeispiel über ein HSK-Spannsystem in die Werkzeugaufnahme 6 (siehe Figur 5) eingesetzt. Diese Werkzeugaufnahme 6 steht in Wirkverbindung mit dem in Figur 3 sichtbaren Werkzeugschieber 4, der in Zustellrichtung verstellbar im Grundkörper 12 geführt ist. Ähnlich wie beim zuvor beschriebenen Ausführungsbeispiel ist der Werkzeugschieber 4 über zwei Seitenführungen 20, 22 in Zustellrichtung geführt. Der Verstellweg ist durch die am Grundkörper ausgebildeten oder an diesem angesetzten Abstützstücke 24 bzw. 26 begrenzt, auf die der Werkzeugschieber 4 an seinen jeweiligen Endlagen aufläuft. Die Abstützung in Achsrichtung der Werkzeugspindel erfolgt über die Auflage 28 des Grundkörpers 12.

Bei diesem Ausführungsbeispiel ist der modular aufgebaute Werkzeugschieber 4 mit zwei Piezoaufnahmen 36a, 36b ausgeführt, in denen jeweils mehrere Piezoaktoren 34a, 34b, 34c bzw. 34d, 34e, 34f hintereinander liegend angeordnet sind. Beim konkreten Ausführungsbeispiel sind somit jeweils drei Piezoaktoren 34 in der zugeordneten Piezoaufnahme 36a, 36b angeordnet, sodass sich bei Ansteuerung aller drei Piezoaktoren 34 deren Teilhübe summieren. Die Steuerung kann so ausgelegt werden, dass die Piezoaktoren jeweils mit dem gleichen Spannungsimpuls beaufschlagt sind. Prinzipiell ist es auch möglich, die einzelnen Piezoaktoren zur Einstellung der Verstellung unterschiedlich anzusteuern. Der Maximalhub ist dabei durch die Einzelhübe der drei Piezoaktoren 34a, 34b, 34c bzw. 34d. 34e, 34f bestimmt. Die maximale Kraft ist in entsprechender Weise durch die Anzahl der parallel angeordneten Piezoaktoren bestimmt, sodass der Zustellhub und auch die Zustellkraft in vergleichsweise großem Umfang variierbar und fein einstellbar sind. Die Gegenkraft wird auch bei diesem Ausführungsbeispiel durch eine Feder 30 aufgebracht, die in der Darstellung gemäß Figur 3 in einer Symmetrieebene zu den beiden Piezoaufnahmen 36a, 36b angeordnet ist. Wie insbesondere aus der Draufsicht gemäß Figur 5 entnehmbar ist, ist der Aufnahmeraum 32 gegenüber den beiden Piezoaufnahmen 36a, 36b zum Werkzeug 8 hin versetzt angeordnet. Wie insbesondere dem Schnitt in Figur 3 entnehmbar ist, sind die Piezoaktoren 34a, 34b, 34c bzw. 34d, 34e, 34f an dem Abstützstück 26abgestützt, während die Feder 30 ihrerseits an dem in Figur 3 rechts liegenden Abstützstück 24 abgestützt ist und am Werkzeugschieber 4 angreift. Beim dargestellten Ausführungsbeispiel kann durch jeden der Piezoaktoren eine Kraft von etwa 850 N in Druckrichtung, d.h. in Richtung der Komprimierung der Feder 30 aufgebracht werden, sodass die Gesamtkraft aus der Summe der Einzelkräfte resultiert. Die Federrate der Feder 30 ist dann entsprechend gewählt, sodass bei der Bearbeitung auch eine in Zugrichtung der Piezoaktoren 34, d.h. in Richtung einer Entlastung der Feder 30 wirksame Kraft aufgebracht werden kann.

Wie bereits erwähnt, ist der Werkzeugschieber 4 bei diesem Ausführungsbeispiel modular ausgeführt, wobei an einem Basisteil die Piezoaufnahmen 36a, 36b und die Federaufnahme 32 ausgebildet sind. Dabei sind die Piezoaufnahmen 36a, 36b stirnseitig zum Abstützstück 24 über eine Stirnwandung 44 verschlossen. Zur Auflage 28 hin ist der Werkzeugschieber 4 mit einer Grundplatte 46 ausgeführt, die an ein Basisteil 42 angesetzt ist und die Piezoaufnahmen 36a, 36b auflageseitig verschließt. Über die Abdeckung 31 ist die Führung des Werkzeugschiebers 4 zum Arbeitsraum hin abgedeckt.

Aus dem Ausführungsbeispiel gemäß den Figuren 3 bis 5 entnimmt der Fachmann, dass zur Variation des Verstellweges und/oder der Verstellkraft die Piezoaktoren 34 in geeigneter Weise angeordnet werden können, um die Stellkräfte und/oder die Stellwege der einzelnen Piezoelemente zu summieren.

Wie bereits erwähnt, wird durch die direkte Verstellung des das Werkzeug 8 tragenden Werkzeugschiebers 4 in Verstellrichtung die Präzision gegenüber den eingangs beschriebenen Lösungen erheblich verbessert, bei denen die Verstellung durch eine elastische Auslenkung eines Schenkels eines Zustellkopfes bewirkt ist.

Offenbart ist ein Nachstellsystem mit einem Zustellkopf, bei dem ein Werkzeug über einen Werkzeugschieber in Zustellrichtung bewegbar ist. Die Verstellung des Werkzeugschiebers erfolgt über zumindest einen Piezoaktor.

### Bezugszeichenliste

- 1: Nachstellsystem
- 2: Zustellkopf
- 4: Werkzeugschieber
- 6: Werkzeugaufnahme
- 8: Werkzeug
- 10: Werkzeugschneide
- 12: Grundkörper
- 14: Befestigungsflansch
- 16: Befestigungsbohrung
- 18: Führung
- 20: Seitenführung
- 22: Seitenführung
- 24: Abstützstück
- 26: Abstützstück
- 28: Auflage
- 30: Feder
- 31: Abdeckung
- 32: Aufnahmeraum
- 34: Piezoaktor
- 36: Piezoaufnahme
- 38: Werkzeugspindel
- 40: Mindermengenschmierung / Innenkühlung
- 42: Basisteil
- 44: Stirnplatte
- 46: Grundplatte

## Patentansprüche

1. Nachstellsystem mit einem eine Werkzeugschneide (10) tragenden Zustellkopf (2), der mit zumindest einem piezoelektrischen Aktor (34, 34a - 34f) zur Radialverstellung der Werkzeugschneide (10) ausgeführt ist, **dadurch gekennzeichnet, dass** der Zustellkopf (2) einen in Radialrichtung verschiebbaren Werkzeugschieber (4) hat, der zur Verstellung der Werkzeugschneide (10) über den piezoelektrischen Aktor (34, 34a - 34f) in Radialrichtung entlang einer Führung verfahrbar ist.

2. Nachstellsystem nach Patentanspruch 1, wobei eine Wirkrichtung des piezoelektrischen Aktors (34, 34a - 34f) in der Radialrichtung als Zustellrichtung verläuft.

3. Nachstellsystem nach Patentanspruch 1 oder 2, wobei der Werkzeugschieber (4) über zumindest ein Gegenkraftelement in Richtung einer Grundposition vorgespannt ist.

4. Nachstellsystem nach Patentanspruch 3, wobei das Gegenkraftelement eine Feder (30) oder eine Federanordnung ist.

5. Nachstellsystem nach Patentanspruch 2 oder 3, wobei das Gegenkraftelement etwa parallel zum piezoelektrischen Aktor angeordnet ist.

6. Nachstellsystem nach einem der vorhergehenden Patentansprüche, wobei eine Vielzahl von piezoelektrischen Aktoren parallel und/oder in Reihe angeordnet sind.

7. Nachstellsystem nach Patentanspruch 6, wobei zumindest zwei Piezoaktoreneinheiten mit jeweils zumindest zwei in Reihe zueinander angeordneten piezoelektrischen Aktoren parallel zueinander angeordnet sind.

8. Nachstellsystem nach Patentanspruch 7, wobei der Werkzeugschieber (4) über zumindest ein Gegenkraftelement in Richtung einer Grundposition vorgespannt ist und das Gegenkraftelement etwa symmetrisch in einer Ebene zwischen den beiden Piezoaktoreneinheiten angeordnet ist.

9. Nachstellsystem nach einem der vorhergehenden Ansprüche, wobei der Werkzeugschieber (4) über zumindest ein Gegenkraftelement in Richtung einer Grundposition vorgespannt ist und die Führung einerseits von einer Abstützung des Gegenkraftelementes und andererseits durch eine Abstützung für den oder die piezoelektrischen Aktoren begrenzt ist.

10. Nachstellsystem nach einem der vorhergehenden Ansprüche, wobei die Führung für den Werkzeugschieber (4) durch eine Abdeckung (31) zu einem Arbeitsraum hin abgedeckt ist.

11. Nachstellsystem nach einem der vorhergehenden Ansprüche, wobei der Zustellkopf (2) eine HSK-Spannvorrichtung zum Spannen eines mit der Werkzeugschneide (10) ausgeführten Werkzeugs (8) hat.

## Claims

1. A readjustment system comprising an advancing head (2) supporting a cutting edge (10) configured to have at least one piezoelectric actuator (34, 34a - 34f) for radially adjusting the cutting edge (10), **characterized in that** the advancing head (2) includes a tool slide (4) displaceable in the radial direction that is movable along a guideway in the radial direction for adjusting the cutting edge (10) by means of the piezoelectric actuator (34, 34a - 34f).

2. The readjustment system according to claim 1, wherein an effective direction of the piezoelectric actuator (34, 34a - 34f) extends in the radial direction as advancing direction.

3. The readjustment system according to claim 1 or 2, wherein the tool slide (4) is biased in the direction of a home position via at least one counterforce element.

4. The readjustment system according to claim 3, wherein the counterforce element is a spring (30) or a spring assembly.

5. The readjustment system according to claim 2 or 3, wherein the counterforce element is arranged approximately in parallel to the piezoelectric actuator.

6. The readjustment system according to any one of the preceding claims, wherein a plurality of piezoelectric actuators is arranged in parallel and/or in series.

7. The readjustment system according to claim 6, wherein at least two piezo actuator units, each including at least two piezoelectric actuators arranged in series with respect to each other, are arranged in parallel to each other.

8. The readjustment system according to claim 7, wherein the tool slide (4) is biased in the direction of a home position via at least one counterforce element and the counterforce element is arranged approximately symmetrically in a plane between the two piezo actuator units.

9. The readjustment system according to any one of the preceding claims, wherein the tool slide (4) is biased in the direction of a home position via at least one counterforce element and the guideway is delimited, on the one hand, by a support of the counterforce element and, on the other hand, by a support for the piezoelectric actuator(s).

10. The readjustment system according to any one of the preceding claims, wherein the guideway for the tool slide (4) is covered toward a working space by a cover (31).

11. The readjustment system according to any one of the preceding claims, wherein the advancing head (2) comprises a HSK (hollow shank taper) clamping device for clamping a tool (8) configured to include the cutting edge (10).

## Revendications

1. Système d'ajustage avec une tête d'avance (2) portant un tranchant d'outil (10) qui est réalisé avec au moins un actionneur piézoélectrique (34, 34a-34f) pour le réglage radial du tranchant d'outil (10), **caractérisé en ce que** la tête d'avance (2) a un coulisseau d'outil (4) mobile dans le sens radial qui est déplaçable pour le réglage du tranchant d'outil (10) par le biais de l'actionneur piézoélectrique (34, 34a-34f) dans le sens radial le long d'un guidage.

2. Système d'ajustage selon la revendication 1, dans lequel un sens d'action de l'actionneur piézoélectrique (34, 34a-34f) s'étend dans le sens radial comme sens d'avance.

3. Système d'ajustage selon la revendication 1 ou 2, dans lequel le coulisseau d'outil (4) est précontraint par le biais d'au moins un élément de force antagoniste en direction d'une position de base.

4. Système d'ajustage selon la revendication 3, dans lequel l'élément de force antagoniste est un ressort (30) ou un agencement de ressort.

5. Système d'ajustage selon la revendication 2 ou 3, dans lequel l'élément de force antagoniste est agencé environ parallèlement à l'actionneur piézoélectrique.

6. Système d'ajustage selon l'une quelconque des revendications précédentes, dans lequel une pluralité d'actionneurs piézoélectriques sont agencés parallèlement et/ou en série.

7. Système d'ajustage selon la revendication 6, dans lequel au moins deux unités d'actionneurs piézoélectriques avec respectivement au moins deux actionneurs piézoélectriques sont agencées en série l'un par rapport à l'autre parallèlement l'un à l'autre.

8. Système d'ajustage selon la revendication 7, dans lequel le coulisseau d'outil (4) est précontraint par au moins au moins un élément de force antagoniste en direction d'une position de base, et l'élément de force antagoniste est agencé à peu près symétriquement dans un plan entre les deux unités d'actionneurs piézoélectriques.

9. Système d'ajustage selon l'une quelconque des revendications précédentes, dans lequel le coulisseau d'outil (4) est précontraint par le biais d'au moins un élément de force antagoniste en direction d'une position de base et le guidage d'une part est délimité par un appui de l'élément de force antagoniste et d'autre part par un appui pour le ou les actionneurs piézoélectriques.

10. Système d'ajustage selon l'une quelconque des revendications précédentes, dans lequel le guidage pour le coulisseau d'outil (4) est recouvert par un recouvrement (31) vers un espace de travail.

11. Système d'ajustage selon l'une quelconque des revendications précédentes, dans lequel la tête d'avance (2) a un dispositif de serrage HSK pour le serrage d'un outil (8) réalisé avec le tranchant d'outil (10).
